(19) Europäisches Patentamt

European Patent Office

Office européen des brevets

(11) EP 1 086 355 B1

(12) FASCICULE DE BREVET EUROPEEN

(45) Date de publication et mention
de la délivrance du brevet:
**07.06.2006 Bulletin 2006/23**

(51) Int Cl.:
*G01B 11/06* (2006.01)      *G01N 21/21* (2006.01)
*C30B 25/16* (2006.01)

(21) Numéro de dépôt: 99923728.2

(22) Date de dépôt: **11.06.1999**

(86) Numéro de dépôt international:
**PCT/FR1999/001394**

(87) Numéro de publication internationale:
**WO 1999/066286 (23.12.1999 Gazette 1999/51)**

(54) **PROCEDE ELLIPSOMETRIQUE ET DISPOSITIF DE COMMANDE DE LA FABRICATION D'UN COMPOSANT EN COUCHE MINCE**

ELLIPSOMETRISCHES VERFAHREN UND KONTROLLVORRICHTUNG ZUR HERSTELLUNG EINES DÜNNSCHICHTBAUELEMENTS

ELLIPSOMETRIC METHOD AND CONTROL DEVICE FOR MAKING A THIN-LAYERED COMPONENT

(84) Etats contractants désignés:
**AT BE CH CY DE DK ES FI FR GB GR IE IT LI LU MC NL PT SE**

(30) Priorité: **16.06.1998  FR 9807594**

(43) Date de publication de la demande:
**28.03.2001   Bulletin 2001/13**

(73) Titulaire: **CENTRE NATIONAL DE LA RECHERCHE SCIENTIFIQUE 75016 Paris Cédex (FR)**

(72) Inventeur: **DREVILLON, Bernard F-92140 Clamart (FR)**

(74) Mandataire: **Michelet, Alain et al Cabinet Harlé et Phélip 7, rue de Madrid 75008 Paris (FR)**

(56) Documents cités:
**FR-A- 2 731 074          FR-A- 2 755 254 US-A- 5 277 747**

• SHIUH CHAO ET AL: "POLARIZED LIGHT SCATTERING BY SILICON OXIDE THIN FILM EDGE ON SILICON: AN EXPERIMENTAL APPROACH FOR THIN FILM THICKNESS DETERMINATION" MEASUREMENT SCIENCE AND TECHNOLOGY, vol. 1, no. 11, 1 novembre 1990 (1990-11-01), pages 1237-1243, XP000170766

**Description**

La présente invention concerne un procédé et un dispositif de commande de la fabrication d'un composant en couche mince. Cette fabrication est préférentiellement faite à partir d'une dissociation de gaz.

On connaît de tels procédés et dispositifs qui sont utilisés en particulier pour la fabrication des composants semi-conducteurs. De nombreux composants semi-conducteurs impliquent le dépôt, sur un substrat, de couches, souvent nombreuses, dont la composition et l'épaisseur sont essentielles pour assurer la qualité des produits fabriqués.

On a déjà proposé et mis en oeuvre des procédés de contrôle, en temps réel, au cours de leur fabrication, de ces couches par ellipsométrie. Jusqu'à présent les mesures ellipsométriques mises en oeuvre font appel à l'ellipsométrie simplifiée, encore appelée classique, visent à mesurer les « paramètres $\psi$ et $\Delta$» caractéristiques de l'échantillon. La surface de l'objet constitue un système, il est éclairé par un faisceau lumineux qui est réfléchi et l'état de polarisation du faisceau réfléchi (éventuellement transmis) est comparé à celui du faisceau incident. La variation du vecteur de polarisation est décrite à partir des coefficients de réflexion $R_s$ et $R_p$, respectivement perpendiculaires et parallèles au plan d'incidence ($R_s$ et $R_p$ sont des amplitudes complexes).

Le système est alors généralement caractérise par les angles $\psi$ et $\Delta$ qui sont reliés aux rapports ($R_p/R_s$) par la relation

$$tg\Psi.exp\ (i\Delta) = (R_p/R_s)$$

Ces méthodes ellipsométriques classiques ont été régulièrement améliorées. On peut, en particulier, se référer au brevet européen EP-0.663.590 qui a pour objet un ellipsomètre spectroscopique modulé. Elles donnent satisfaction lors de mesures sur des couches isotropes présentant des interfaces planes.

On connaît également par les documents FR-2731074, FR-2755254 et l'article "Polarized light scattering by silicon oxide thin film edge on silicon: an experimental approach for thin film thickness determination" de Shlum Chao dans "Measurement Science and Technology" Vol. 1 (1990), n°11 pages 1237-1243 divers procédés et dispositifs de mesure.

Toutefois, dans de nombreux cas, il s'est avéré que ces mesures sont insuffisantes pour caractériser un procédé de fabrication. En particulier, quand le système est anisotrope, on peut constater des couplages entre les modes de polarisation.

Cela provient de ce que, la matrice de Jones représentant les paramètres pris en compte généralement en ellipsométrie classique étant de la forme :

$$\begin{bmatrix} R_p & R_{ps} \\ R_{sp} & R_s \end{bmatrix}$$

$R_{ps}$ $R_{sp}$ sont nuls lorsque le système est isotrope et l'un d'eux au moins ne l'est pas lorsqu'il est anisotrope. Dès lors, un système anisotrope est insuffisamment caractérisé par le rapport $R_p/R_s$.

On connaît plus généralement l'ellipsométrie de Mueller, qui part de la constatation que l'état polarimétrique d'un flux lumineux est complètement

représenté par un vecteur de dimension 4 appelé vecteur de Stokes $\begin{bmatrix} I \\ u \\ v \\ w \end{bmatrix}$ et que des modifications, introduites par un système, sont représentées par une matrice, dite matrice de Mueller, de dimension 4 x 4 ayant donc 16 coefficients.

Des procédés et appareils visant à la mesure des 16 coefficients de la matrice de Mueller permettent la caractérisation d'un système de manière générale. Toutefois, on comprend aisément que l'extraction de 16 paramètres lors de mesures ellipsométriques implique le recours à des dispositifs sophistiqués et à un traitement lourd des données, ce qui implique des dispositifs coûteux et des traitements souvent relativement lents. Jusqu'à présent, ces appareils, trop lents et trop lourds n'ont pas pu être utilisés pour le contrôle, en temps réel, de procédés de fabrication ou d'élaboration.

La matrice de Mueller étant représentée de manière générale de la façon suivante :

$$M = \begin{bmatrix} m_{00} & m_{01} & m_{02} & m_{03} \\ m_{10} & m_{11} & m_{12} & m_{13} \\ m_{20} & m_{21} & m_{22} & m_{23} \\ m_{30} & m_{31} & m_{32} & m_{33} \end{bmatrix}$$

Il est connu que cette matrice dans le cadre d'un système simple. isotrope, se présente de la façon suivante (à une constante multiplicative près):

$$M = \begin{bmatrix} 1 & -N & 0 & 0 \\ -N & 1 & 0 & 0 \\ 0 & 0 & C & S \\ 0 & 0 & -S & C \end{bmatrix}$$

où $N = \cos(2\psi)$, $S = \sin(2\psi) \sin\Delta$ et $C = \sin(2\psi) \cos\Delta$.

De même, dans le cas d'un système anisotrope non dépolarisant, il est également possible d'extraire les paramètres de la matrice de Jones à partir de ceux de la matrice de Mueller.

Un système non dépolarisant est un système qui ne modifie pas le taux de polarisation $p = 1$ qui est défini pour un vecteur de Stokes $\begin{bmatrix} I \\ u \\ v \\ w \end{bmatrix}$ par

$$p = \frac{\sqrt{u^2 + v^2 + w^2}}{I}$$

Un lien est ainsi établi entre les paramètres $\psi$ et $\Delta$ utilisés dans la première catégorie de mesures ellipsométriques simplifiées présentées plus haut et les paramètres de la matrice de Mueller présentés dans cette deuxième catégorie de méthode de mesures.

L'utilisation de la mesure cinétique des angles ellipsométriques $\psi$ et $\Delta$ pour contrôler en temps réel un procédé d'élaboration est connue et par exemple décrite dans les brevets américains 5.277.747 du 11/01/94 et 5.131.752 du 21/07/92. Toutefois, cette méthode ne peut être utilisée en dehors du champ d'application de l'ellipsométrie conventionnelle qui est définie par l'absence de phénomènes de dépolarisation ou d'anisotropie au niveau de l'objet mesuré ou contrôlé. En particulier, il a été constaté que certains systèmes ne permettent pas la réalisation de mesures ellipsométriques significatives simplifiées, telles que celles correspondant à des systèmes isotropes présentant des interfaces planes, caractérisés simplement par les paramètres $\psi$ et $\Delta$.

Or, beaucoup de procédés d'élaboration de couches minces rendent inévitable la prise en compte de phénomènes de dépolarisation de la lumière, par exemple le dépôt de structures optiques sur des substrats transparents épais (verre, polymères) induisant des pertes de cohérence. Les circuits microélectroniques actuels présentent systématiquement des motifs anisotropes à l'échelle submicronique et induisent des phénomènes de diffraction (comparables à un réseau) et de dépolarisation (rugosités de surface de l'ordre de grandeur de la longueur d'onde).

L'extension des méthodes ellipsométriques conventionnelles au contrôle des procédés de gravure en micro-électronique a été tentée, de manière essentiellement empirique, sans tenir compte des phénomènes de diffraction et de dépolarisation (brevet européen 0.653.621 Al ; S. Vallon et al., J. Vac. Sci. Technol. A 15, 1997. p. 865 ; H. L. MAYNARD et al., J. Vac. Sci. Technol. B 15, 1997, p. 109). De telles méthodes, même si elles peuvent apparaître satisfaisantes dans des cas très particuliers, ne peuvent en aucun cas être généralisées. D'ailleurs, elles visent souvent à identifier une fin d'attaque au moyen d'une variation brutale des angles ellipsométriques (liée à l'apparition d'une couche sous-jacente). De telles signatures ne peuvent être généralisées à d'autres procédés de gravure. En particulier, de telles méthodes empiriques ne sont pas utilisables dans le cas de procédés de gravure homogène qui ne donnent pas lieu à l'apparition de couches sous-jacentes. C'est par exemple le cas lors de la constitution de tranchées d'isolation entre transistors.

Le but de l'invention est de proposer un procédé et un dispositif de commande de fabrication d'un composant en couche mince applicable dans des situations où les mesures ellipsométriques classiques ne sont pas possibles.

L'invention concerne donc un procédé et un dispositif de commande de la fabrication d'un composant en couche mince dans lequel :

- on fait une mesure ellipsométrique sur l'objet représenté par sa matrice de Mueller,
- on contrôle en temps réel la fabrication en fonction de la mesure ellipsométrique.

Selon l'invention, on détermine préalablement certains paramètres au moins, liés à la matrice de Mueller, adaptés à la caractérisation de la fabrication. et seuls ces paramètres sont extraits de la mesure ellipsométrique. Ces paramètres adaptés à la caractérisation de la fabrication sont au moins deux paramètres différents des angles ellipsométriques $\psi$ et $\Delta$ et des fonctions trigonométriques de ceux-ci.

En effet, il a été imaginé et vérifié que même lorsque l'ellipsométrie classique n'est pas applicable car les mesures des angles $\psi$ et $\Delta$ conduisent à des imprécisions et ne permettent pas le contrôle d'un procédé de commande de la fabrication d'un objet particulier, il reste possible de déterminer certains paramètres liés à la matrice de Mueller, utilisables pour la caractérisation de la fabrication.

A cet effet, selon l'invention, on peut utiliser l'ensemble des paramètres de la matrice de Mueller, pour contrôler la fabrication.

Dans d'autres cas, on étudiera tout d'abord le procédé de fabrication en mesurant l'ensemble des paramètres de la matrice de Mueller à l'aide d'un ellipsomètre de Mueller. L'examen des résultats ainsi obtenus permet d'extraire certains paramètres de cette matrice qui peuvent être soit directement des coefficients de celle-ci, soit des combinaisons de ces coefficients qui sont adaptées à la caractérisation de la fabrication, sont en nombre inférieur aux coefficients de la matrice elle-même, et sont plus facilement accessibles que l'ensemble de ces coefficients de la matrice de Mueller. Une fois, ces paramètres déterminés, eux seuls sont alors utilisés pour la caractérisation de la fabrication dans son utilisation courante.

La détermination de ces paramètres peut également résulter du savoir-faire des opérateurs, sans qu'il leur soit nécessaire de recourir à une mesure préalable de l'ensemble des coefficients de la matrice de Mueller.

Dans différents modes de réalisation préférés, le procédé de l'invention présente les caractéristiques suivantes ayant chacune leurs avantages particuliers et susceptibles d'être utilisées selon de nombreuses combinaisons techniquement possibles:

- on fait la fabrication par dissociation de gaz et on la contrôle par un panneau de gaz;
- l'objet est anisotrope et/ou dépolarisant;
- les paramètres adaptés à la caractérisation de la fabrication sont une combinaison linéaire des lignes de la matrice de Mueller ;
- les paramètres adaptés à la caractérisation de la fabrication sont une combinaison linéaire des colonnes de la matrice de Mueller ;
- l'objet fabriqué est un composant semi-conducteur ;
- on contrôle le dépôt d'une couche ;
- on contrôle la gravure d'une couche ;
- on contrôle la composition de la couche ;
- on contrôle l'épaisseur de la couche ;
- le panneau de gaz alimente un réacteur à plasma ;
- le panneau de gaz contrôle des débits de gaz ;

- les gaz dont les débits sont contrôlés, font partie de l'ensemble constitué par l'azote $N_2$, l'ammoniaque $NH_3$, l'hydrogène $H_2$, le méthane $CH_4$, l'hélium He, le silane $SiH_4$, l'oygène $O_2$, l'oxyde d'azote $N_2O$.

L'invention concerne également une installation permettant la mise en oeuvre de ces différents procédés.
De préférence, cette installation comporte :

- un modulateur couplé en entrée et/ou
- un polarimètre en sortie.

L'invention sera décrite ci-après plus en détail, en référence aux dessins dans lesquels :

- la Figure 1 est une représentation simplifiée d'une installation de fabrication mettant en oeuvre l'invention. Elle comprend un réacteur à plasma, un système d'injection de gaz et un ellipsomètre à modulation de phase ;
- la Figure 2 schématise un bras d'entrée utilisable dans certains modes de réalisation de l'invention ;
- la Figure 3 montre la concrétisation d'un bras d'entrée de la Figure 2 :

- la Figure 4 représente un bras de sortie utilisable dans certains modes de réalisation de l'invention.

Dans un premier mode de réalisation de l'invention, on considère le contrôle sur un système anisotrope n'introduisant pas de dépolarisation.
L'effet de l'échantillon est alors représenté par une matrice de Jones de la forme :

$$\begin{bmatrix} R_p & R_{ps} \\ R_{sp} & R_s \end{bmatrix}$$

L'ellipsométrie à modulation de phase classique peut alors être mise en oeuvre. On sait que l'intensité mesurée, en présence d'un modulateur (généralement photoélastique) produisant un déphasage $\delta(t)$ est :

$$I = I_o + I_c \cos \delta(t) + I_s \sin \delta(t)$$

avec $\delta(t) = a \sin \omega t$ au $1^{er}$ ordre
et que

$$\frac{R_p}{R_s} = \tan \Psi e^{i\Delta}, \frac{R_{sp}}{R_s} = \tan \Psi' e^{i\Delta'}, \frac{R_{ps}}{R_s} = \tan \Psi'' e^{i\Delta''}$$

on obtient alors :

avec $A = 90°$, $M_o = 0°$    $I_o = 1 + \tan^2 \psi''$
   $I_c = 2 \tan \psi'' \cos \Delta''$
   $I_s = 2 \tan \psi'' \sin \Delta''$

avec $A = 90°$, $M_o = 90°$    $I_o = 1 + \tan^2 \psi''$
   $I_c = -2 \tan \psi'' \cos \Delta''$
   $I_s = -2 \tan \psi'' \sin \Delta''$

avec $A = 0°$, $M_o = 0°$    $I_o = \tan^2 \psi + \tan^2 \psi'$
   $I_c = 2 \tan \psi' \tan \psi \cos \Delta'$

$$I_s = 2 \tan \psi' \tan \psi \sin \Delta'$$

avec A = 0°, $M_o$ = 90°    $I_o = \tan^2 \psi + \tan^2 \psi'$
$I_c = -2 \tan \psi' \tan \psi \cos \Delta'$
$I_s = -2 \tan \psi' \tan \psi \sin \Delta'$

A et Mo représentent respectivement les orientations de l'analyseur et du modulateur par rapport au plan d'incidence.

Ces coefficients peuvent être mesurés à une longueur d'onde fixe ou à plusieurs. Le contrôle s'effectue en temps réel en comparant les trajectoires des paramètres ou combinaison de paramètres mesurés à des valeurs de consigne préalablement enregistrées ou simulées à l'aide de modèles théoriques.

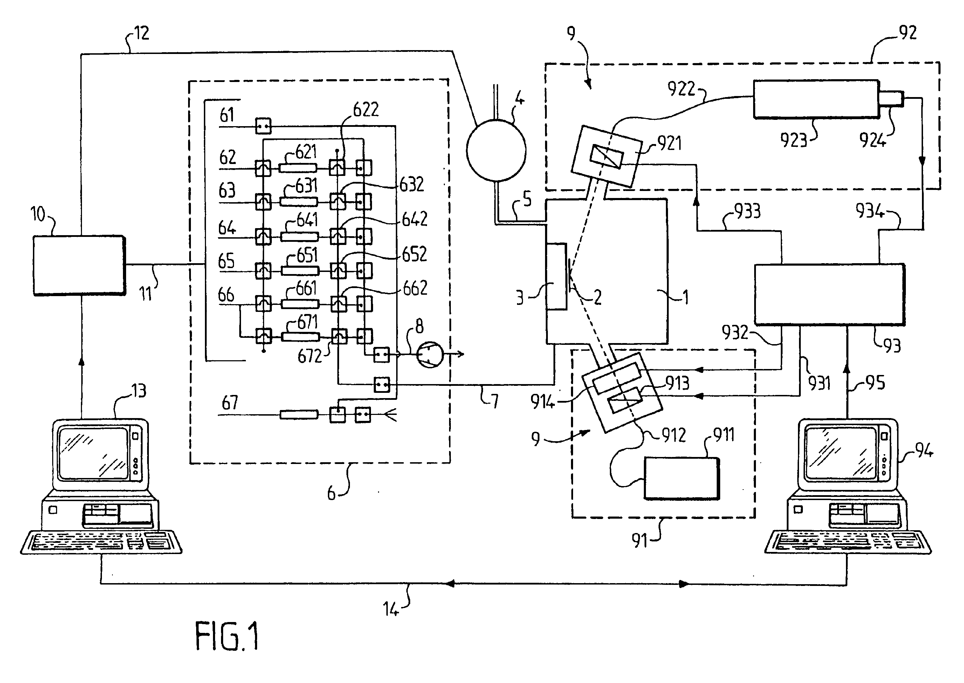

Dans ce premier mode de réalisation, la mesure du système peut être effectuée à partir d'un ellipsomètre à modulation de phase représenté sur la Figure 1. Il comprend un modulateur de phase (bras d'entrée) et un polariseur (bras de sortie). On propose, alors, de contrôler en temps réel un procédé d'élaboration de couches minces (dépôt ou gravure) à partir de la mesure cinétique de composants de la matrice de Mueller du système, ou de combinaisons ou fonctions de ces éléments. Il permet également de caractériser un milieu anisotrope non-dépolarisant selon la méthode décrite plus haut.

Dans un deuxième mode de réalisation de l'invention, on considère le contrôle sur un système dépolarisant. La représentation du système par une matrice de Jones est alors insuffisante et il faut recourir à la matrice de Mueller.

Dans la mise en oeuvre du deuxième mode de réalisation, à la différence d'un ellipsomètre à modulation de phase « conventionnel » comprenant un modulateur de phase simple en entrée et un analyseur en sortie, l'ellipsomètre comporte un générateur d'état de polarisation en entrée et/ou un polarimètre en sortie.

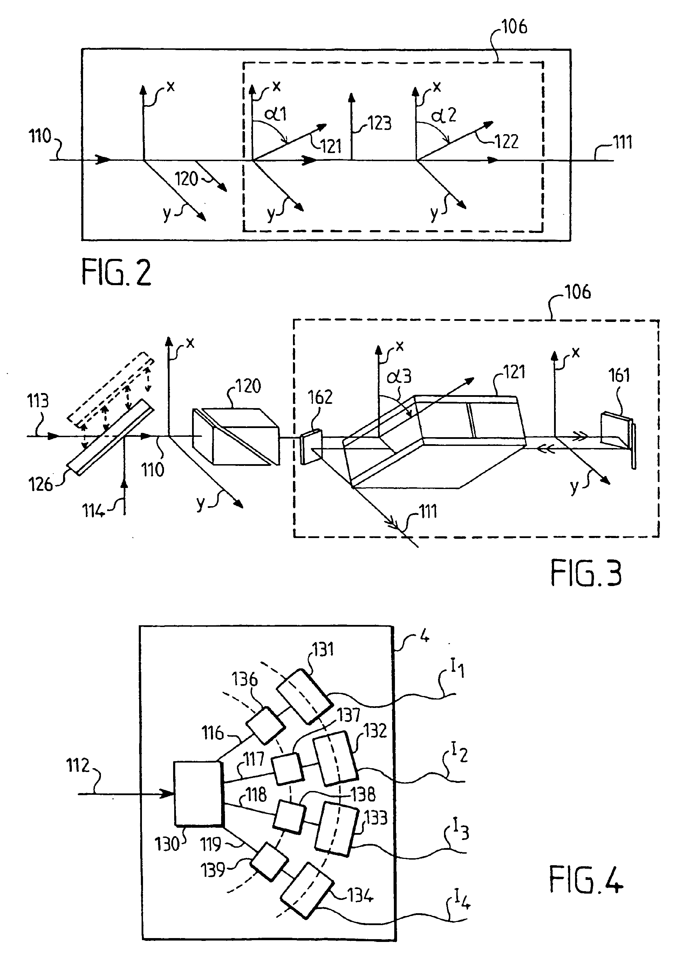

Le bras d'entrée de l'ellipsomètre est schématisé sur la Figure 2. Il comprend un polariseur linéaire 120 et un modulateur couplé 106 comportant deux modulateurs de phase 121 et 122 et un système de couplage 123 du type polariseur partiel et déphaseur. Les deux modulateurs de phase 121 et 122 ont une même orientation et le système de couplage 123 est interposé entre eux et transmet le faisceau incident 110 du premier modulateur de phase 121 vers le second modulateur de phase 122.

Préférentiellement, les orientations des différents éléments sont les suivants. Le faisceau incident 110 ayant une direction et un sens de propagation et un plan incident étant défini à partir de cette direction de propagation et de l'échantillon 2, on forme un repère comportant un premier axe x perpendiculaire à la direction de propagation et dans le plan d'incidence, un deuxième axe y perpendiculaire au plan d'incidence et un troisième axe parallèle à la direction de propagation et orienté dans le même sens, ce repère étant direct. Le polariseur 120 est alors un polariseur parfait orienté selon l'axe y. Les deux modulateurs de phase 121 et 122 sont identiques et orientés dans le plan x-y selon des directions formant respectivement avec l'axe y, des angles $\alpha1$ et $\alpha2$. Les angles $\alpha1$ et $\alpha2$ sont avantageusement identiques et préférentiellement égaux à $\pi/4$. Le système de couplage 123 est orienté selon l'axe x.

En fonctionnement, le faisceau incident 110 est polarisé linéairement par le polariseur 120, puis subit une double modulation couplée du fait des modulateurs de phase 121. 122 et du système de couplage 123. Le système de couplage 123 assure deux fonctions : une polarisation partielle (polariseur imparfait) et un déphasage, qui modulent les quatre composantes du vecteur de Stokes S.

Selon une réalisation particulière de ce bras d'entrée, représentée sur la Figure 3, un polariseur 120 tel que celui commercialisé sous le nom de « polariseur de Glan Thomson » polarisant linéairement le faisceau incident 110 et un modulateur couplé 106 comportant un unique modulateur de phase 121 et un système de couplage 161 du type polariseur partiel et déphaseur fonctionnant en réflexion. Le modulateur de phase 121 est interposé entre le polariseur 120 et le système de couplage 161. de telle sorte qu'il produit une première modulation du faisceau incident 110 polarisé et l'envoie vers le système de couplage 161. ce dernier renvoyant le faisceau incident 110 vers le modulateur de phase 121 qui produit une seconde modulation. Le modulateur couplé 106 comprend également un miroir 162 disposé entre le polariseur 120 et le modulateur 121 qui réfléchit le faisceau 111 modulé deux fois vers l'échantillon.

Ainsi, le polariseur 120 est orienté selon un axe y et le modulateur 121 est orienté dans un plan x-y selon une direction formant un angle $\alpha3$ avec l'axe x, $\alpha3$ étant égal à 45°, Le système de couplage 161 est quant à lui orienté selon l'axe x, de manière à permettre un retour du faisceau incident 110 parallèlement à l'aller. Le miroir 162 renvoie avantageusement le faisceau 111 selon l'axe y perpendiculaire à x.

Le modulateur 121 est avantageusement un modulateur électro-optique (cellule de Pockels). Un tel modulateur 121 permet une commande externe de déphasage et autorise une bande passante dépassant 100 MHz.

Le modulateur de phase 121 peut également être un modulateur photoélastique, on obtient alors une gamme de longueurs d'onde étendue et une grande fenêtre optique.

Avantageusement, la source lumineuse émet des faisceaux laser 113, 114 à plusieurs longueurs d'onde. L'ellipsomètre comprend alors un miroir 126 mobile permettant de sélectionner la longueur d'onde désirée.

Le bras de sortie représenté à la Figure 4 comprend avantageusement un séparateur 130 de faisceaux séparant le faisceau de mesure en au moins quatre faisceaux secondaires 116-119. Il comprend également des analyseurs de polarisation 136-139 donnant à chacun de ces faisceaux secondaires 116-119. un état de polarisation distinct et des photodétecteurs 131-134 détectant respectivement les intensités I1 à I4 des faisceaux secondaires 116-119. A titre d'exemple, les faisceaux secondaires 116-119 étant au nombre de quatre, les analyseurs de polarisation 136-139 associés sont respectivement rien, un polariseur linéaire à 90°, un polariseur linéaire à -45° et l'association d'une lame quart d'onde à 45° et d'un polariseur à 90°.

Cet ellipsomètre de Mueller permet le contrôle des procédés selon l'invention. Toutefois, comme cela a été indiqué plus haut, de nombreux procédés peuvent être contrôlés avec un montage ellipsométrique simplifié, dit intermédiaire. On peut ainsi, par exemple, utiliser un modulateur couplé dans le bras d'entrée ou encore un modulateur de phase unique en entrée et un polarimètre en sortie, chacune de ces configurations permettant la mesure de plus de deux coefficients liés à la matrice de Mueller.

On propose alors de contrôler en temps réel un procédé d'élaboration de couches minces (dépôt ou gravure) à partir de la mesure cinétique de combinaisons ou fonctions de ces éléments, autres que les deux angles ellipsométriques « conventionnels » $\psi$ et $\Delta$ (ou de combinaisons ou fonctions trigonométriques de ceux-ci).

On peut ainsi, dans ce deuxième mode de réalisation, en utilisant des configurations intermédiaires, obtenir les mesures suivantes :

- avec seulement un modulateur couplé en entrée, c'est-à-dire en mesurant directement l'énergie du flux lumineux réfléchi par l'échantillon, on obtient les coefficients de la 1$^{ère}$ ligne de la matrice de Mueller M ;
- avec un modulateur couplé en entrée et un analyseur en sortie, on peut obtenir des combinaisons linéaires des lignes de la matrice de Mueller M, par exemple, la somme des deux premières lignes lorsque l'analyseur est orienté sous l'angle A = 0, et la somme de la première et de la troisième lorsque son orientation est A = 45° ;
- avec un modulateur simple en entrée et un polarimètre en sortie, on obtient des combinaisons linéaires des colonnes de la matrice de Mueller M dépendant de l'orientation du modulateur d'entrée.

Dans le deuxième mode de réalisation de l'invention, on peut aussi utiliser un ellipsomètre à modulation de phase classique qui peut permettre la mesure simultanée de deux éléments de la matrice de Mueller de la manière suivante : la mesure de la matrice de Mueller normalisée ($m_{oo}$ = 1, les 15 autres paramètres de la matrice sont inconnus) par ellipsométrie conventionnelle (on suppose partout que l'orientation du polariseur est P = 45°), on obtient :

1. Dans la configuration classique Polariseur-Modulateur-Echantillon-Analyseur (AMSP), on peut mesurer les trois premières lignes de la matrice (donc 12-1=11 paramètres), en combinant les orientations du modulateur $M_O$ = 0° (ou $M_O$ = 90°) avec les quatre orientations de l'analyseur (A = 0°, 90°. 45°, - 45°) d'une part, et $M_O$ = 45° (ou - 45°) d'autre part. Cela fait donc 8 configurations de mesure au total (chaque configuration nous apporte deux grandeurs mesurées).

2. En inversant le sens de propagation de la lumière, ce qui correspond à de très nombreuses réalisations actuelles des ellipsomètres (Polariseur-Echantillon-Modulateur-Analyseur), on est dans la configuration ASMP dans laquelle on est capable de mesurer le transpose de la matrice M, c'est-à-dire les trois premières colonnes (11 éléments) par le même nombre de configurations de mesure (8). Cependant, si on a déjà fait les mesures dans 1., il suffira de 4 configurations supplémentaires (et non plus huit), par exemple à $M_O$ = 0° (ou 90°) pour compléter la matrice jusqu'à 14 éléments mesurés. En conclusion, on peut mesurer tous les éléments sauf un (14 au total) de la matrice M normalisée en passant par 12 configurations et en inversant une fois le sens du faisceau (bien sûr, si l'on pouvait mesurer la réflectivité en plus, on aurait pu ne pas normaliser la matrice et ainsi déterminer 15 des 16 éléments, mais il y aura toujours un élément manquant m33). La surdétermination des paramètres (24 grandeurs mesurées pour 14 éléments) peut être utilisée pour former des moyennes.

Les procédés d'élaboration visés ici sont essentiellement le dépôt plasma de couches minces et de structures multicouches ou à gradients de composition (filtres optiques), ou bien la gravure (plasma) de composants microélectroniques. Plus généralement, la méthode de contrôle proposée peut s'appliquer à d'autres procédés d'élaboration utilisant des gaz ou des composés métallorganiques (CVD : Chemical Vapor Deposition et MOCVD) ou se généraliser à des procédés basés sur l'utilisation de sources ou cibles solides (pulvérisation cathodique, évaporation sous vide, épitaxie par jet moléculaire...). Dans ce dernier cas, la contre-réaction à partir des mesures ellipsométriques n'est pas effectuée sur une gestion de gaz, mais sur d'autres paramètres de contrôle (courants, température...).

L'installation de fabrication comprend une chambre à plasma 1 dans laquelle est placé le substrat 2 qui est, par exemple, l'élément d'origine de la plaquette de semi-conducteurs à fabriquer. Ce substrat est fixé sur un support 3. La pression dans la chambre à plasma 1 est obtenue par l'effet de la pompe 4, reliée à celle-ci par la canalisation 5. Le panneau de gaz 6 alimente par la canalisation 7, la chambre à plasma 1. Il est relié à des alimentations de gaz, respectivement 61 en azote $N_2$, 62 en ammoniaque $NH_3$, 63 en hydrogène $H_2$, 64 en méthane $CH_4$, 65 en hélium He,

66 en silane SiH$_4$, 67 en oxygène O$_2$ ou en oxyde d'azote N$_2$O.

Les entrées 62 à 65 sont chacune reliées à la canalisation 7 par l'intermédiaire d'un débitmètre 621, 631, 641, 651 et d'une vanne 622. 632, 642.652.

L'alimentation en silane 66 est reliée à deux débitmètres 661 et 671 et deux vannes 662 et 672.

Une évacuation 8 vers les égouts permet d'assurer le bon fonctionnement de ce panneau de gaz.

L'élaboration des couches sur le substrat 2 dans la chambre à plasma 1 est contrôlée à l'aide d'un ellipsomètre 9 composé d'une tête d'émission 91 et d'un ensemble de réception 92.

La tête d'émission 91 comporte une source 911 reliée à une fibre optique 912 à un ensemble constitué d'un polariseur 913 et d'un modulateur de phase 914.

L'ensemble de réception 92 comporte un polariseur-analyseur 921 relié par une fibre optique 922 à un monochromateur 923 suivi d'un photodétecteur 924.

L'ellipsomètre 9 est contrôlé par une unité de traitement 93 commandée par un ordinateur 94.

L'unité de traitement 93 commande le polariseur 913 et le modulateur 914, respectivement par les liaisons électriques 931 et 932, et reçoit le signal du détecteur 924 par la liaison électrique 934. Sa liaison avec l'ordinateur 94 est assurée par la connexion électrique 95.

Le panneau de gaz 6 est contrôlé par une unité de traitement 10 à laquelle elle est reliée par les connexions 11. Cette unité de traitement 10 commande également par l'intermédiaire de la liaison 12, la pompe 4 et/ou la puissance du générateur de plasma. Elle est commandée par un micro-ordinateur 13 qui est lui-même relié au micro-ordinateur 94 par une liaison 14.

Ainsi, l'ellipsomètre 9 permet d'obtenir au travers de l'unité de traitement 93 et du micro-ordinateur 94, les caractéristiques physiques et chimiques de la couche en cours de dépôt sur le substrat 2. Ces informations sont comparées aux caractéristiques du produit à fabriquer (et éventuellement à leur variation en fonction du temps) qui ont été préalablement mises en mémoire dans l'ordinateur 94.

Le résultat de cette comparaison commande par l'intermédiaire de la connexion 14, les instructions fournies par l'ordinateur 13 à l'unité de traitement 10 qui détermine la nature et la concentration des gaz introduits par le panneau de contrôle 6 dans la chambre à plasma 2.

On réalise ainsi un contrôle complet du processus de fabrication et donc une optimisation des produits ainsi fabriqués.

Comme il a été indiqué plus haut, la mesure des paramètres $\psi$ et $\Delta$ traditionnellement accessible par les mesures ellipsométriques simplifiées se révèle souvent insuffisante ou mal adaptée, de telle sorte qu'il a été souvent nécessaire de prévoir dans les dispositifs de l'art antérieur, sur le substrat 2, un emplacement spécialement destiné à des mesures de contrôle et perdu pour la fabrication.

L'unité de traitement 93 et l'ordinateur 94 sont programmés de telle sorte que le contrôle des propriétés de la couche déposée sur l'échantillon 2 puisse être réalisé par un petit nombre de paramètres préalablement déterminés.

**Revendications**

1.  Procédé de commande de la fabrication d'un objet (2) anisotrope et/ou dépolarisant dans lequel:

    - on fait une mesure ellipsométrique sur l'objet représenté par sa matrice de Mueller,
    - on contrôle en temps réel la fabrication en fonction de la mesure ellipsométrique,

    **caractérisé en ce qu'**on détermine préalablement à la fabrication dudit objet certains paramètres de la matrice de Mueller, adaptés à la caractérisation de la fabrication, et que seuls ces paramètres sont extraits de la mesure ellipsométrique pendant la fabrication, lesdits paramètres étant au nombre d'au moins deux et étant différents des angles ellipsométriques $\psi$ et $\Delta$ et des fonctions trigonométriques de ceux-ci.

2.  Procédé de commande de la fabrication d'un objet selon la revendication 1, **caractérisé en ce que** ledit objet est anisotrope.

3.  Procédé de commande de la fabrication d'un objet selon l'une des revendications 1 ou 2, **caractérisé en ce que** ledit objet est dépolarisant.

4.  Procédé de commande de la fabrication d'un objet selon l'une quelconque des revendications 1 à 3, **caractérisé en ce que** ledit objet induit des phénomènes de diffraction.

5.  Procédé de commande de la fabrication d'un objet selon l'une quelconque des revendications 1 à 4, **caractérisé**

**en ce que** les paramètres adaptés à la caractérisation de la fabrication sont une combinaison linéaire des lignes de la matrice de Mueller.

6. Procédé de commande de la fabrication d'un objet selon l'une quelconque des revendications 1 à 4, **caractérisé en ce que** les paramètres adaptés à la caractérisation de la fabrication sont une combinaison linéaire des colonnes de la matrice de Mueller.

7. Procédé de commande selon l'une quelconque des revendications 1 à 6, **caractérisé en ce que** l'objet fabriqué est un composant semi-conducteur.

8. Procédé de commande de la fabrication d'un objet selon la revendication 7, **caractérisé en ce que** la mesure ellipsométrique caractérise une couche pendant son dépôt.

9. Procédé de commande de la fabrication d'un objet selon la revendication 7, **caractérisé en ce que** la mesure ellipsométrique caractérise une couche pendant sa gravure.

10. Procédé de commande de la fabrication d'un objet selon l'une des revendications 8 ou 9, **caractérisé en ce que** la mesure ellipsométrique caractérise la composition de la couche.

11. Procédé de commande de la fabrication d'un objet selon l'une des revendications 8 ou 9, **caractérisé en ce que** la mesure ellipsométrique caractérise l'épaisseur de la couche.

12. Procédé de commande de la fabrication d'un objet selon l'une quelconque des revendications 1 à 11, **caractérisé en ce que** la fabrication est faite par dissociation de gaz et on la contrôle par un panneau de gaz (6).

13. Procédé de commande de la fabrication d'un objet selon la revendication 12, **caractérisé en ce que** le panneau de gaz alimente un réacteur à plasma (1).

14. Procédé de commande de la fabrication d'un objet selon l'une des revendications 12 ou 13, **caractérisé en ce que** le panneau de gaz contrôle des débits de gaz.

15. Installation de fabrication d'un objet anisotrope et/ou dépolarisant comportant un ellipsomètre permettant la réalisation d'une mesure sur l'objet (2) qui est représenté par sa matrice de Mueller,
**caractérisée en ce que** l'ellipsomètre comporte des moyens pour mesurer, en temps réel, des paramètres déterminés préalablement à la fabrication dudit objet et adaptés à la caractérisation de la fabrication, lesdits paramètres étant au nombre d'au moins deux et étant différents des angles ellipsométriques $\psi$ et A et des fonctions trigonométriques de ceux-ci, lesdits paramètres étant des paramètres de la matrice de Mueller.

16. Installation de fabrication d'un objet selon la revendication 15, **caractérisée en ce qu'**elle est faite par dissociation de gaz.

17. Installation de fabrication d'un objet selon l'une des revendications 15 et 16, **caractérisée en ce qu'**elle comporte un modulateur couplé (106) en entrée.

18. Installation de fabrication d'un objet selon l'une des revendications 15 à 17, **caractérisée en ce qu'**elle comporte un polarimètre en sortie.

19. Installation de fabrication d'un objet selon l'une quelconque des revendications 15 à 18, **caractérisée en ce qu'**elle est adaptée à la mise en oeuvre du procédé selon l'une quelconque des revendications 1 à 14.

**Claims**

1. A making control method of an anisotropic and/or depolarising object (2) wherein:

   - the object represented by its Mueller matrix is measured ellipsometrically,
   - the making is controlled in real-time in relation to the ellipsometric measurement,

**characterised in that** certain parameters of the Mueller matrix are determined beforehand the making, parameters suited to the characterisation of the making and only these parameters are extracted from ellipsometric measurement during making, whereas the said parameters are at least two different parameters of the ellipsometric angles $\Psi$ and $\Delta$ and of the trigonometric functions of the said angles.

2. A making control method of an object according to claim 1, **characterised in that** the said object is anisotropic

3. A making control method of an object according to any one of claims 1 or 2, **characterised in that** the said object is depolarising.

4. A making control method of an object according to any one claims 1 to 3, **characterised in that** the said object provides diffraction phenomena.

5. A making control method of an object according to any one of claims 1 to 4, **characterised in that** the parameters suited to the characterisation of the making are a linear combination of the lines of the Mueller matrix.

6. A making control method of an object according to any one of claims 1 to 4, **characterised in that** the parameters suited to the characterisation of the making are a linear combination of the columns of the Mueller matrix.

7. A control method according to any one of claims 1 to 6, **characterised in that** the object made is a semi-conductor component.

8. A making control method of an object according to claim 7, **characterised in that** the ellipsometric measurement characterises a layer during deposit.

9. A making control method of an object according to claim 7, **characterised in that** the ellipsometric measurement characterises a layer during etching

10. A making control method of an object according to one of claims 8 or 9, **characterised in that** the ellipsometric measurement characterises the composition of the layer.

11. A making control method of an object according to one of claims 8 or 9, **characterised in that** the ellipsometric measurement characterises the thickness of the layer.

12. A making control method of an object according to any one of claims 1 to 11, **characterised in that** the making is carried out by gas dissociation and it is controlled by a gas panel (6).

13. A making control method of an object according to claim 12, **characterised in that** the gas panel supplies a plasma reactor (1).

14. A making control method of an object according to one of claims 12 or 13, **characterised in that** the gas panel controls gas flow-rates.

15. An installation for making an anisotropic and/or depolarising object comprising an ellipsometer enabling measuring an object (2) that is represented by its Mueller matrix,
**characterised in that** the ellipsometer comprises means for measuring in real-time, parameters determined beforehand the making of said object and, suited to the characterisation of the making, whereby the said parameters are at least two different parameters of the ellipsometric angles $\Psi$ and $\Delta$ and of the trigonometric functions of the said angles, said parameters being parameters of the Mueller matrix.

16. An installation for making an object according to claim 15, **characterised in that** it is made by gas dissociation.

17. An installation for making an object according to one claims 15 and 16, **characterised in that** it comprises a coupled modulator (106) at input.

18. An installation for making an object according to one of claims 15 to 17, **characterised in that** it comprises a polarimeter at output.

**19.** An installation for making an object according to any one of claims 15 to 18, **characterised in that** it is suited to the implementation of the method according to any one of claims 1 to 14.

**Patentansprüche**

**1.** Steuerungsverfahren für die Herstellung eines anisotropen und/oder depolarisierenden Objekts (2), bei welchem:

- eine Ellipsometriemessung an dem Objekt durchgeführt wird, welche durch ihre Müller-Matrix dargestellt ist,
- in Echtzeit die Herstellung in Abhängigkeit von der Ellipsometriemessung gesteuert wird,

**dadurch gekennzeichnet, dass** vor der Herstellung des Objekts gewisse Parameter der Müller-Matrix bestimmt werden, welche zur Charakterisierung der Herstellung geeignet sind, und dass einzelne dieser Parameter während der Herstellung aus der Ellipsometriemessung extrahiert werden, wobei die Parameter zahlenmäßig wenigstens zwei sind und sich in den Ellipsometriewinkeln $\Psi$ und $\Delta$ und den trigonometrischen Funktionen derselben unterscheiden.

**2.** Steuerungsverfahren für die Herstellung eines Objekts nach Anspruch 1, **dadurch gekennzeichnet, dass** das Objekt anisotrop ist.

**3.** Steuerungsverfahren für die Herstellung eines Objekts nach einem der Ansprüche 1 oder 2, **dadurch gekennzeichnet, dass** das Objekt depolarisierend ist.

**4.** Steuerungsverfahren für die Herstellung eines Objekts nach einem der Ansprüche 1-3, **dadurch gekennzeichnet, dass** das Objekt Brechungsphänomene induziert.

**5.** Steuerungsverfahren für die Herstellung eines Objekts nach einem der Ansprüche 1-4, **dadurch gekennzeichnet, dass** die zur Charakterisierung der Herstellung geeigneten Parameter eine Linearkombination von Zeilen der Müller-Matrix sind.

**6.** Steuerungsverfahren für die Herstellung eines Objekts nach einem der Ansprüche 1-4, **dadurch gekennzeichnet, dass** die zur Charakterisierung der Herstellung geeigneten Parameter eine Linearkombination von Spalten der Müller-Matrix sind.

**7.** Steuerungsverfahren nach einem der Ansprüche 1-6, **dadurch gekennzeichnet, dass** das hergestellte Objekt eine Halbleiterkomponente ist.

**8.** Steuerungsverfahren für die Herstellung eines Objekts nach Anspruch 7, **dadurch gekennzeichnet, dass** die Ellipsometriemessung eine Schicht während ihrer Abscheidung charakterisiert.

**9.** Steuerungsverfahren für die Herstellung eines Objekts nach Anspruch 7, **dadurch gekennzeichnet, dass** die Ellipsometriemessung eine Schicht während ihrer Ätzung charakterisiert.

**10.** Steuerungsverfahren für die Herstellung eines Objekts nach einem der Ansprüche 8 oder 9, **dadurch gekennzeichnet, dass** die Ellipsometriemessung die Zusammensetzung der Schicht charakterisiert.

**11.** Steuerungsverfahren für die Herstellung eines Objekts nach einem der Ansprüche 8 oder 9, **dadurch gekennzeichnet, dass** die Ellipsometriemessung die Dicke der Schicht charakterisiert.

**12.** Steuerungsverfahren für die Herstellung eines Objekts nach einem der Ansprüche 1-11, **dadurch gekennzeichnet, dass** die Herstellung durch Dissoziation von Gas erfolgt und sie durch ein Gaspanel (6) gesteuert wird.

**13.** Steuerungsverfahren für die Herstellung eines Objekts nach Anspruch 12, **dadurch gekennzeichnet, dass** das Gaspanel einen Plasmareaktor (1) versorgt.

**14.** Steuerungsverfahren für die Herstellung eines Objekts nach einem der Ansprüche 12 oder 13, **dadurch gekennzeichnet, dass** das Gaspanel die Gasdurchflüsse steuert.

**15.** Anlage zur Herstellung eines anisotropen und/oder depolarisierenden Objekts, umfassend ein Ellipsometer, welches die Durchführung einer Messung an dem Objekt (2) ermöglicht, welche durch ihre Müller-Matrix dargestellt ist, **dadurch gekennzeichnet, dass** das Ellipsometer Mittel umfasst, um in Echtzeit Parameter zu messen, welche vor der Herstellung des Objekts bestimmt und zur Charakterisierung der Herstellung geeignet sind, wobei die Parameter zahlenmäßig wenigstens zwei sind und sich in den Ellipsometriewinkeln $\psi$ und $\Delta$ und den trigonometrischen Funktionen derselben unterscheiden, wobei die Parameter Parameter der Müller-Matrix sind.

**16.** Anlage zur Herstellung eines Objekts nach Anspruch 15, **dadurch gekennzeichnet, dass** sie durch Dissoziation von Gas erfolgt.

**17.** Anlage zur Herstellung eines Objekts nach einem der Ansprüche 15 und 16, **dadurch gekennzeichnet, dass** sie am Eingang einen gekoppelten Modulator (106) umfasst.

**18.** Anlage zur Herstellung eines Objekts nach einem der Ansprüche 15-17, **dadurch gekennzeichnet, dass** sie am Ausgang ein Polarimeter umfasst.

**19.** Anlage zur Herstellung eines Objekts nach einem der Ansprüche 15-18, **dadurch gekennzeichnet, dass** sie zum Einsatz des Verfahrens nach einem der Ansprüche 1-14 ausgestaltet ist.

FIG.1

EP 1 086 355 B1

FIG.2

FIG.3

FIG.4